# EUROPÄISCHE PATENTSCHRIFT

(11) **EP 0 963 873 B1**
(45) Veröffentlichungstag und Bekanntmachung des Hinweises auf die Patenterteilung: **21.01.2004**
(21) Anmeldenummer: 99108107.6
(22) Anmeldetag: 24.04.1999
(51) Int. Cl.: B60Q 1/04, B60Q 1/10

(54) **Vorrichtung zur automatischen Scheinwerfereinstellung**
Device for automatically adjusting headlights
Dispositif d'ajustement automatique de phares

(30) Priorität: 08.06.1998 DE 19825570
(43) Veröffentlichungstag der Anmeldung: 15.12.1999
(73) Patentinhaber: Dr.Ing. h.c.F. Porsche Aktiengesellschaft, 70435 Stuttgart (DE)
(72) Erfinder: Frasch, Wilhelm, 72644 Oberboihingen (DE)

(56) Entgegenhaltungen:
- EP-A- 0 845 388
- GB-A- 2 028 513

## Beschreibung

Die Erfindung bezieht sich auf eine Vorrichtung zur automatischen Scheinwerfereinstellung mittels eines Stellelements, das mit einem Winkelsensor zusammenwirkt.

Aus der US-PS 4,052,609 ist eine Vorrichtung zum Einstellen von Scheinwerfern eines Kraftfahrzeuges in Abhängigkeit von der Stellung einer Fahrzeugachse bekannt. Über eine mit der Achse verbundenen Stelleinrichtung, welche aus einem Stellelement besteht, das auf eine Übertragungseinrichtung einwirkt, werden die Scheinwerfer eingestellt.

Eine Vorrichtung zur automatischen Scheinwerfereinstellung gemäß dem Oberbegriff von Anspruch 1 ist aus EP-A-0 845 388 bekannt.

Aufgabe der Erfindung ist es, eine Vorrichtung zur automatischen Scheinwerfereinstellung zu schaffen, die in einfacher Weise mit einem Lenkerarm einer Radaufhängung eines Kraftfahrzeugs verbindbar ist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß mit einem, beispielsweise quer zum Fahrzeug ausgerichteten Lenkerarm einer Radaufhängung in einfacher Weise ein Halteelement genau positionierbar zu verbinden ist und an dem eine Stellstange befestigbar ist, die mit einem Schwenkhebel eines Winkelsensors verbunden wird. Über den Winkelsensor werden dann entsprechend der Stellung der Radaufhängung bzw. der Lage des Fahrzeugs zur Straße die Scheinwerfer automatisch eingestellt.

Das Halteelement besteht vorzugsweise aus einem Kunststoffteil und ist als Profilelement ausgeführt. Es wird von oben auf den Lenkerarm aufgesetzt und stützt sich an Außenrändern des Lenkerarmes ab. Damit eine sichere, in Querrichtung verrutschungssichere Lage gewährleistet ist, weist das Profilelement zwei außenseitige Absetzungen auf, in denen sich das Profilelement auf den Außenrändern des Lenkerarmes abstützen kann.

Zur Erreichung einer ausreichenden Stabilität bei gleichzeitig geringem Gewicht ist das Profilelement filigran ausgeführt und besteht aus zwei im Abstand angeordnete profilierte flächige Stege, die annähernd parallel liegend sind und welche endseitig jeweils eine Verbindung aufweisen.

Zur Befestigung mit dem Lenkerarm ist ein vertikal angeordneter Klemmzapfen mit einem Spreizkopf vorgesehen, der an die beiden Stege diese verbindend angeformt ist und welcher zu beiden Seiten eine sich über die gesamte Länge des Zapfens erstreckende Rippe aufweist

Der Klemmzapfen weist einen sogenannten Spreizkopf mit federnden Segmenten und nach außen weisenden Spannflächen auf, die in eine Öffnung des Lenkerarmes einsetzbar sind. Eine Verklemmung in einer Bohrung des Lenkerarmes erfolgt mittels eines einsetz- bzw. einschlagbaren zylindrischen Bolzens, der eine Spreizung des Kopfes bewirkt.

Die Stellstange wird mit dem Halteelement an einem überkragenden Ende verbunden. Dieses ist mit einem abgewinkelten Schenkel versehen, an dem die Stellstange unter Zwischenschaltung eines Lagers bzw. eines Kugelgelenks verbunden wird. Entsprechend wird auch das andere Ende der Stellstange mit dem Schwenkhebel des Winkelsensors verbunden, an dem ebenfalls ein Gelenk bzw. ein Kugelgelenk vorgesehen ist bzw. sein kann.

Nach einer weiteren Ausführung der Erfindung kann das Halteelement mit der Stellstange und Lagern auch aus einem einstückigen Teil aus einem Kunststoffmaterial bestehen.

Die Lagerstellen am Halteelement und am Schwenkhebel werden durch sogenannte Filmgelenke gebildet, wobei an jedem Ende der Stellstange zwei Filmgelenke vorgesehen sind, die jeweils zwei um 90° zueinander versetzte Biegestellen aufweisen.

Vorteilig bei dieser erfindungsgemäßen Vorrichtung ist insbesondere die Einteiligkeit sowie die einfache Anbringung der Vorrichtung am Lenkerarm über das angeformte Halteelement durch den Klemmzapfen bei gleichzeitig beidseitiger Abstützung am Lenkerarm, wodurch eine sichere Positionierung geschaffen wird.

Ausführungsbeispiele der Erfindung sind in den Zeichnungen dargestellt und werden im folgenden näher beschrieben.

Es zeigen
- Fig. 1: eine schaubildliche Darstellung einer Ausführung für eine automatische Scheinwerfereinstellung mittels einer Stellstange, die mit einem Halteelement verbunden ist,
- Fig. 2: eine Seitenansicht des Halteelements,
- Fig. 3: das Halteelement im Längsschnitt,
- Fig. 4: einen Schnitt durch das Halteelement nach der Linie IV-IV gemäß Fig. 2,
- Fig. 5: einen Schnitt durch das Halteelement nach der Linie V-V der Fig. 2,
- Fig. 6: eine vergrößerte Darstellung des Klemmzapfens mit Spreizkopf und
- Fig. 7: eine schaubildliche Darstellung einer weiteren Ausbildung einer Vorrichtung mit einer einteiligen Ausführung mit Stellstange, Halteelement und Lagerungen.

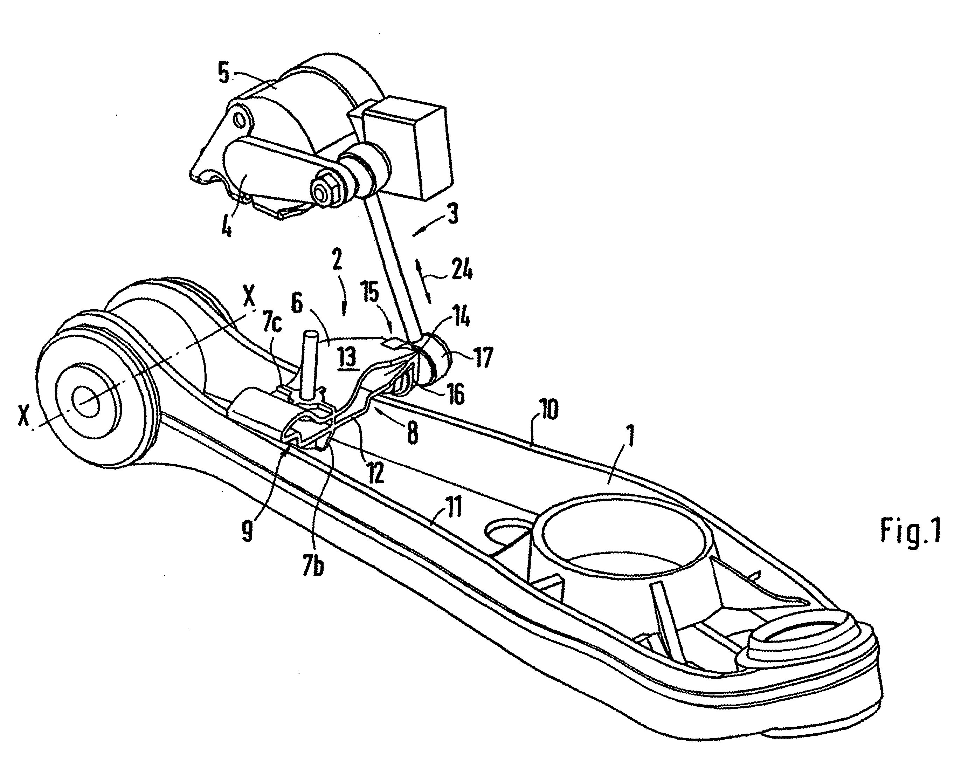

Die Vorrichtung gemäß Fig. 1 umfaßt im wesentlichen an einem mit einem Lenkerarm 1 einer Radaufhängung verbundenes Halteelement 2, das mit einer Stellstange 3 verbunden ist, die an einem Schwenkhebel 4 eines Winkelsensors 5 gehalten wird.

Das Halteelement 2 besteht aus einem sich quer zum Lenkerarm 1 erstreckenden Profilelement 6, das über einen sogenannten Klemmzapfen 7 mit dem Lenkerarm 1 verbindbar ist.

Zum Positionieren des Halteelements 2 auf dem Lenkerarm 1 weist es zwei Absetzungen 8, 9 auf, die sich auf Außenrändern 10, 11 des Lenkerarmes 1 abstützen. Zwischen diesen Absetzungen ist ein tiefergelegener Steg 12 vorgesehen, der eine Breite entsprechend dem Abstand der beiden Außenränder 10, 11 zueinander aufweist.

Das Halteelement 2 besitzt zwei im Abstand gegenüberstehende endseitig miteinander verbundene flächige Stege 13,14, die eine profilierte Form aufweisen. Das eine freie Ende 15 des Elements 2 ist mit einem abgewinkelten Schenkel 16 versehen, an dem die Stellstange 3 gehalten wird. Diese ist mittels einer Schraube im Schenkel 16 befestigt, wobei an der Stellstange 3 ein Lagerkopf 17 zur Aufnahme eines Gelenks; beispielsweise eines Kugelgelenks, vorgesehen ist. Das diesem Lagerkopf 17 abgekehrte andere Ende der Stellstange 3 ist unter Zwischenschaltung eines Gelenks, beispielsweise eines Kugelgelenks, mit dem Schwenkhebel 4 des Winkelsensors 5 verbunden.

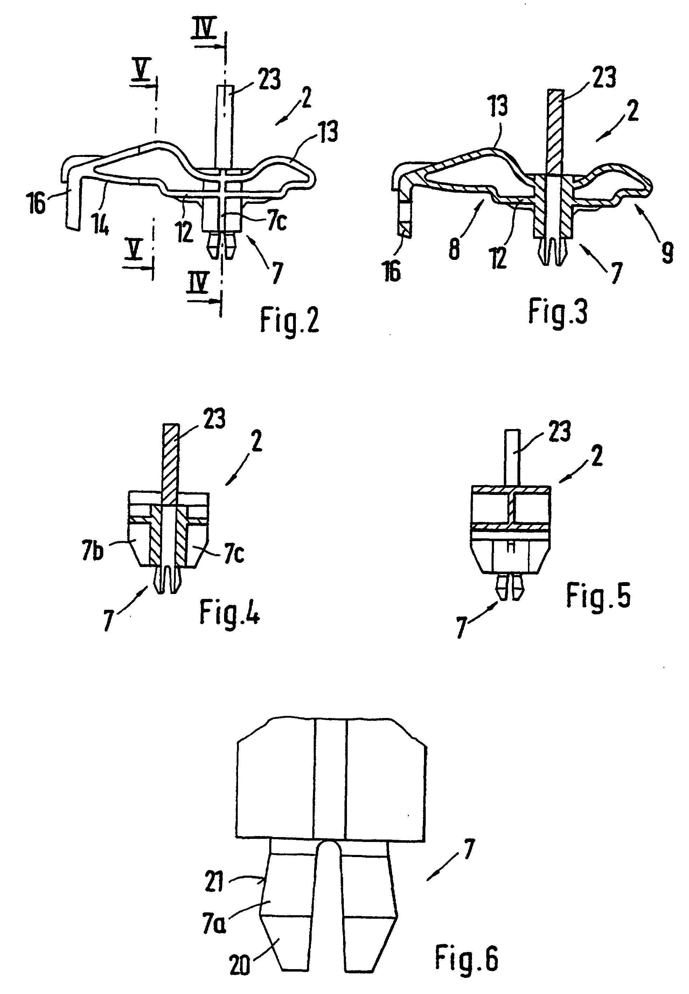

Der Klemmzapfen 7 ist an das Halteelement 2 mit angeformt und weist endseitig einen Spreizkopf 7a (Fig. 6) mit mindestens vier federnden Segmenten 20 auf, die widerhakenförmig nach außen weisende Spannflächen 21 besitzen, welche eine Bohrung im Lenkerarm 1 hintergreifen. Durch Einsetzen eines zylindrischen Zapfens 23 erfolgt eine feste aber lösbare Verbindung zum Lenkerarm 1 hin.

Der angeformte Spannzapfen 7 ist verbindend zwischen den beiden flächigen Stegen 13, 14 des Profilelements angeordnet und ist zu beiden Seiten mit vertikal verlaufenden Rippen 7b und 7c versehen, welche sich mindestens über die gesamte Höhe des Elements 2 erstrecken.

Bei einer Schwenkbewegung des Lenkerarmes 1 um eine aufbauseitige Lagerung des Fahrzeugs mit der horizontalen Schwenkachse X-X, aufgrund von Radbewegung bzw. Fahrzeugbewegung, bewegt sich die Stellstange 3 in Pfeilrichtungen 24 und somit auch der Schwenkhebel 4, so daß der Winkelsensor 5 entsprechend beaufschlagt wird und eine automatische Scheinwerfereinstellung gesteuert werden kann.

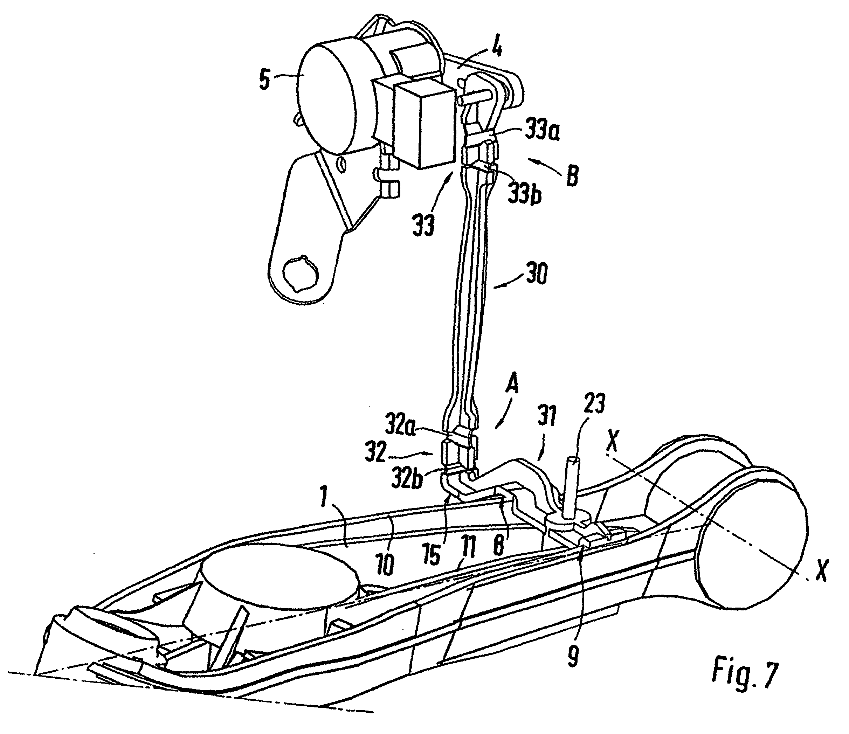

Nach einer weiteren Ausführung gemäß Fig. 7 besteht die Stellstange 30 mit Halteelement 31 und Lagern 32, 33 aus einem einstückigen Kunststoffteil. Die Befestigung am Lenkerarm 1 erfolgt, wie bei der Ausführung gemäß Fig. 1. Ebenso ist die Positionierung und Abstützung auf den Außenrändern 10, 11 des Lenkerarmes 1 nahezu identisch.

Die Stellstange 30 weist im unteren Verbindungsbereich A zwei Lager 32 auf, die um 90° zueinander versetzte Biegestellen 32a und 32b aufweisen. Entsprechend ist auch der obere Verbindungsbereich B zum Schwenkhebel 4 des Winkelsensors 5 ausgebildet. Das Lager 33 umfaßt zwei um 90° zueinander versetzte Biegestellen 33a und 33b. Diese Biegestellen 32a, 32b und 33a, 33b sind als sogenannte Filmgelenke ausgeführt.

## Patentansprüche

1. Vorrichtung zur automatischen Scheinwerfereinstellung mittels eines Stellelements, das mit einem Winkelsensor (5) zusammenwirkt, **dadurch gekennzeichnet, daß** mit mindestens einem Lenkerarm (1) einer Radaufhängung ein Halteelement (2; 31) verbindbar ist, das mittels eines Klemmzapfens (7) im Lenkerarm (1) befestigbar ist und das an seinem sich über den Lenkerarm (1) herauserstreckenden einen freien Ende (15) mindestens ein Lager (17; 32) für eine Stellstange (3; 30) des Winkelsensors (5) aufweist.

2. Vorrichtung nach Anspruch 1, **dadurch gekennzeichnet, daß** das Halteelement (2) aus einem sich quer zum Lenkerarm (1) erstreckenden Profilelements (6) besteht, das sich auf Außenrändern (10, 11) des Lenkerarmes (1) jeweils in einer Absetzung (8, 9) abstützt und das freie Ende (15) abgewinkelt ausgebildet ist und eine Aufnahme für das Lager (17) der Stellstange (3) aufweist.

3. Vorrichtung nach den Ansprüchen 1 oder 2, **dadurch gekennzeichnet, daß** die Stellstange (3) am Halteelement (2) um eine etwa horizontale Achse verschwenkbar ist, die in einem Höhenabstand zu einer weiteren, etwa horizontalen Achse an einem Schwenkhebel (4) des Winkelsensors (5) angeordnet ist.

4. Vorrichtung nach den Ansprüchen 1, 2 oder 3, **dadurch gekennzeichnet, daß** das Halteelement (2) zwei im Abstand gegenüberstehende endseitig miteinander verbundene flächige Stege (13, 14) umfaßt, die im Bereich des Klemmzapfens (7) über mindestens eine vertikale Rippe (7b, 7c) verbunden sind.

5. Vorrichtung nach einem oder mehreren der vorhergehenden Ansprüche, **dadurch gekennzeichnet, daß** der Klemmzapfen (7) einen Spreizkopf (7a) umfaßt, der nach außen weisende federnde Segmente (20) mit Spannflächen (21) besitzt und in den Spreizkopf (7a) ein Bolzen (23) zum Festsetzen einschiebbar ist.

6. Vorrichtung nach Anspruch 1, **dadurch gekennzeichnet, daß** die Stellstange (30) mit dem Halteelement (31) und Lager (32,33) aufweisende Schwenkachsen aus einem einstückigen Element besteht, wobei die Lager (32, 33) aus Filmgelenken bestehen und die Schwenkachsen durch Biegestellen (32a, 32b und 33a, 33b) gebildet sind.

7. Vorrichtung nach den Ansprüchen 1 oder 6, **dadurch gekennzeichnet, daß** die unteren und oberen horizontalen Schwenkachsen (32a, 32b und 33a, 33b) jeweils um 90° zueinander versetzt angeordnet sind.

## Claims

1. A device for the automatic adjustment of headlights by means of an adjustment element which co-operates with an angle sensor (5), **characterized in that** a retaining element (2; 31) is connectable to at least one control arm (1) of a wheel suspension, the retaining element (2; 31) being securable in the control arm (1) by means of a clamping pin (7) and one free end (15) of the said retaining element (2; 31) which extends beyond the control arm (1) having at least one bearing (17; 32) for an adjustment rod (3; 30) of the angle sensor (5).

2. A device according to Claim 1, **characterized in that** the retaining element (2) comprises a profile element (6) which extends transversely to the control arm (1) and which is supported on external edges (10, 11) of the control arm (1) in a respective offset (8, 9) in each case, and the free end (15) is angled and has a receiving means for the bearing (17) of the adjustment rod (3).

3. A device according to Claims 1 or 2, **characterized in that** the adjustment rod (3) is pivotable on the retaining element (2) about a horizontal axis which is situated at a vertical distance from a further, substantially horizontal axis on a pivoting lever (4) of the angle sensor (5).

4. A device according to Claims 1, 2 or 3, **characterized in that** the retaining element (2) comprises two planar webs (13, 14) which are opposite each other at a distance and are connected to each other at their ends and which are connected in the region of the clamping pin (7) by way of at least one vertical rib (7b, 7c).

5. A device according to one or more of the preceding Claims, **characterized in that** the clamping pin (7) comprises a spreading head (7a) which has outwardly directed springing segments (20) with clamping faces (21), and a pin (23) for fastening purposes is capable of being inserted in the spreading head (7a).

6. A device according to Claim 1, **characterized in that** the adjustment rod (30) together with the retaining element (31) and pivot shafts comprising bearings (32, 33) comprises a one-piece element, wherein the bearings (32, 33) comprise film hinges and the pivot shafts are formed by bending points (32a, 32b and 33a, 33b).

7. A device according to Claims 1 or 6, **characterized in that** the lower and upper horizontal pivot shafts (32a, 32b and 33a, 33b) are arranged offset by 90° in each case with respect to each other.

## Revendications

1. Dispositif de réglage automatique de phares au moyen d'un élément de réglage qui coopère avec un détecteur d'angle (5), **caractérisé en ce que**, un élément de maintien (2 ; 31) peut être relié avec au moins un bras de direction (1) d'une suspension de roue, qui peut être fixé au moyen d'un tourillon bloquant (7) dans le bras de direction (1) et qui présente au moins un palier (17 ; 32) pour une barre de réglage (3 ; 30) en son extrémité libre s'étendant vers l'extérieur au-dessus du bras de direction (1).

2. Dispositif selon la revendication 1, **caractérisé en ce que**, l'élément de maintien (2) est constitué d'un élément profilé (6) s'étendant transversalement par rapport au bras de direction (1), qui s'appuie sur des bords extérieurs (10, 11) du bras de direction (1), chaque fois sur un décrochement (8, 9) et que l'extrémité libre (15) est formée de manière coudée et présente un logement pour le palier (17) de la barre de réglage (3).

3. Dispositif selon les revendications 1 ou 2, **caractérisé en ce que**, la barre de réglage (3) à l'élément de maintien (2) peut pivoter autour d'un axe sensiblement horizontal qui est disposé à distance dans le sens de la hauteur d'un autre axe sensiblement horizontal d'un levier pivotant (4) du détecteur d'angle (5).

4. Dispositif selon les revendications 1, 2 ou 3, **caractérisé en ce que**, l'élément de maintien (2) comprend deux entretoises (13, 14) plates et minces, reliées ensembles à leur extrémité, face à face à distance l'une par rapport à l'autre, qui, dans la zone du tourillon bloquant (7), sont reliées par au moins une nervure verticale (7b, 7c).

5. Dispositif selon l'une ou plusieurs des précédentes revendications, **caractérisé en ce que**, le tourillon bloquant (7) comprend une tête d'écartement (7a) qui possède des segments élastiques (20) dirigés vers l'extérieur, avec des surfaces de pression (21) et que dans la tête d'écartement (7a), une cheville (23) peut être insérée pour la fixation.

6. Dispositif selon la revendication 1, **caractérisé en ce que** la barre de réglage (30) avec l'élément de maintien (31) et les axes de pivotement présentant les paliers (32, 33) sont constitués d'un élément monobloc, les paliers (32, 33) étant constitués de charnières souples et les axes de basculement étant formés par des emplacements de pliage (32a, 32b et 33a, 33b).

7. Dispositif selon les revendications 1 ou 6, **caractérisé en ce que**, les axes de basculement horizontaux supérieurs et inférieurs (32a, 32b et 33a, 33b) sont chaque fois décalés de 90 ° les uns par rapport aux autres.
